Europäisches Patentamt

European Patent Office

Office européen des brevets

(19)

(11) **EP 1 039 701 A2**

(12) **EUROPEAN PATENT APPLICATION**

(43) Date of publication:
**27.09.2000 Bulletin 2000/39**

(51) Int. Cl.⁷: **H04L 25/02**

(21) Application number: **00201081.7**

(22) Date of filing: **24.03.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **24.03.1999 JP 8043799**

(71) Applicant:
**Texas Instruments Incorporated Dallas, Texas 75251 (US)**

(72) Inventor: **Miyamitsu, Fumiaki Higashikunisaki-gun, Oita, 872-1652 (JP)**

(74) Representative: **Holt, Michael Texas Instruments Limited, European Patents Department (MS 13), PO Box 5069 Northampton NN4 7ZE (GB)**

(54) **Signal line drive circuit**

(57) A signal line drive circuit that can control the slew rate and suppress the generation of noise by reducing the spike current without being influenced by the stray capacitance of the signal line. The discharge for a capacitor C1 is conducted by means of a current supply circuit that supplies a prescribed current, for example, a current mirror circuit, the ON/OFF of a switching element transistor NT1 controlled in response to a control signal $S_D$ and a transistor NT2 that is used for discharge is turned ON/OFF by the voltage of a node ND1 that is set in response to the ON/OFF of the transistor NT1. When the voltage of the signal line DL is pulled down, since its slew rate is determined by means of the current value of the current supply circuit and the capacitive value of the capacitor C1, the current value of the spike current can be controlled in response to the said slew rate and the stray capacitance of the signal line DL, and the noise that is generated due to the spike current can be suppressed.

FIG. 1

**Description**

FIELD OF THE INVENTION

This invention relates to a signal line drive circuit that maintains a signal line to which a prescribed parasitic capacitance is applied at a prescribed potential, for example a common potential, in response to a control signal.

BACKGROUND OF THE INVENTION

In an $I^2C$ system that is the serial interface of a two-line system, a master device conducts communications with a designated slave by designating one from among a plurality of slave devices by means of an address signal comprising data with a prescribed number with bits, for example 8 bits.

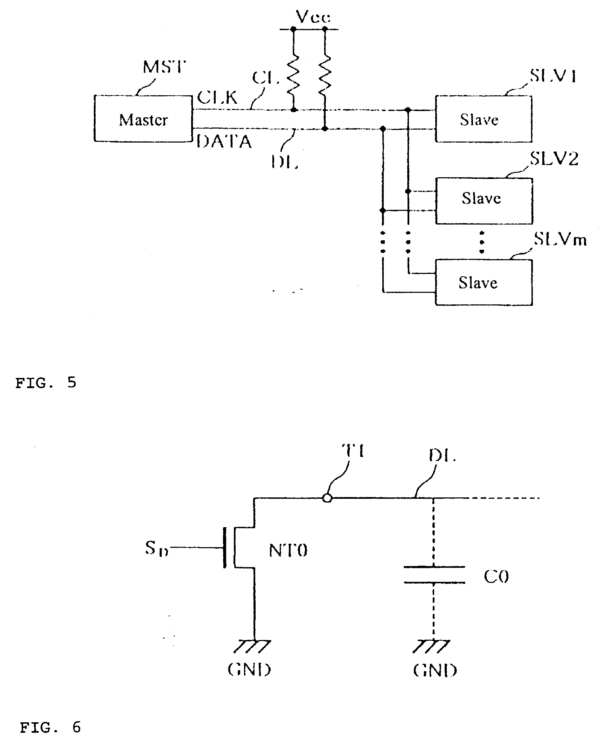

FIG. 5 shows a construction example of a system using a general $I^2C$ system interface. As is illustrated, this system is constructed by means of one master device MST, and m units of slave devices SLV1, SLV2, · ·, SLVm. A clock signal line for the purpose of transmitting a clock signal CLK and a data signal line DL for the purpose of transmitting data are connected between the master device MST and each slave device. Since the respective slave devices SLV1, SLV2, · ·, SLVm are connected in parallel to the data signal line DL, in order to recognize the respective slave devices, an address comprising 8 bits of data is assigned to each respective slave device.

When the master device MST conducts communications with a prescribed slave device, the address of the slave device that becomes the object of communications is transmitted on the data signal line DL. When a slave device SLV1, SLV2, · ·, SLVm has detected the fact that its own address has been received from the data signal line DL, it transmits an acknowledge signal to the master device MST. Specifically, for example, the slave device for which its own address has been designated lowers the data signal line DL to a low level, for example, to a ground potential GND level, which is the common potential. When the master device MST acquires an acknowledge signal from the designated slave device, it determines that the designated slave device is in a standby condition and conducts the exchange of data with the designated slave device through the data signal line DL.

Normally, in order to transmit an acknowledge signal to the master device MST, each slave device SLV1, SLV2, · ·, SLVm, by means of turning ON an open collector transistor or an n channel open drain transistor, shorts the data signal line DL, for example, to a ground potential GND, and pulls the potential of the data signal line DL down to ground potential GND.

Incidentally, in the above-mentioned drive system for a data signal line used in the past, since there is parasitic capacitance (stray capacitance) on the data signal line, at the same time that the open collector transistor or the n channel open drain transistor is turned ON, a spike current flows, electromagnetic radiation is generated, and due to this noise is generated.

In FIG. 6, stray capacitance C0 and an open drain transistor NT0 for a data signal line DL are shown. As is illustrated, the drain of the transistor NT0 is connected to the terminal T1 of the data signal line DL. Because of this, at the same time that said transistor NT0 is switched from the OFF state to the ON state, the electrical charge that was accumulated in the stray capacitance C0 is discharged through the transistor NT0, and instantaneously a large current, in other words a spike current, is generated, and noise is generated due to the electromagnetic radiation. In particular, a high frequency component is contained in this noise, and there is the drawback that a harmful influence is exerted on the circuits of an analog system.

The above-mentioned spike current is proportional to the product of the stray capacitance and the slew rate of the data signal line. In other words, the spike current I (t) can be expressed by the following equation.

$$I(t) = C_0 \, dv(t)/dt \qquad (1)$$

In Equation 1, $C_0$ is the value of the stray capacitance of the data signal line, v (t) is a function related to the time t for the voltage of the data signal line, and dv (t)/dt is the slew rate of the data signal line. According to Equation 1, in order to reduce the spike current I (t), it can be seen that this can be done by reducing either the stray capacitance $C_0$ or the slew rate dv (t)/dt of the data signal line.

As for the stray capacitance of the data signal line, since this is a value that is determined by means of the application of the system, by means of optimizing the wiring of the clock signal line CL and the data signal line between the master device MST and the respective slave devices, this can be suppressed to a minimum, but there are limits to that. Because of this, there is no solution other than by some sort of method reducing the slew rate of the data signal line. However, as the slew rate of the data signal line is lowered, the transmission rate of the data is also lowered in response resulting in limitations in the reduction of the slew rate. Because of this, it is necessary to set the slew rate appropriately.

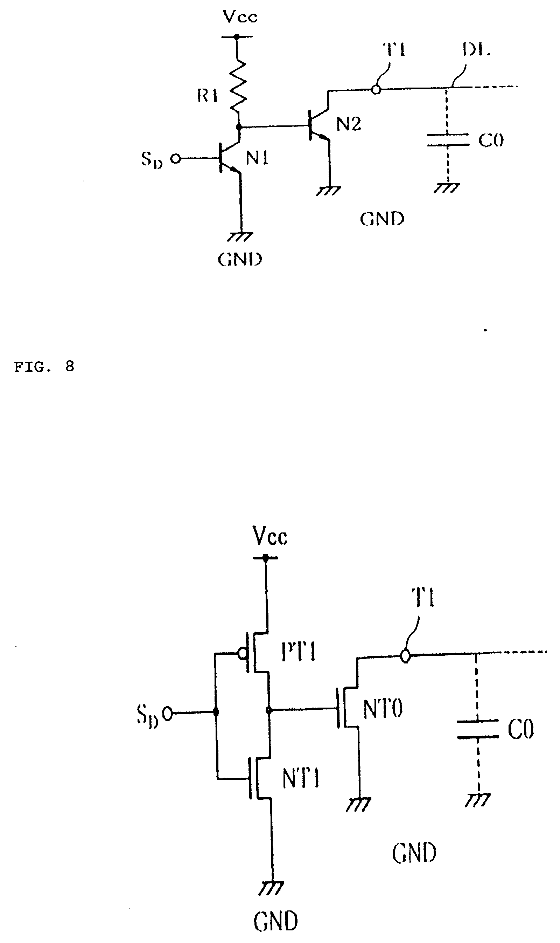

In FIGS. 7 and 8 data signal line drive circuits proposed for the purpose of improving the slew rate are shown. In the drive circuit of FIG. 7, the pMOS transistor PT1 and the nMOS transistor NT1 construct an inverter. A control signal $S_D$ is applied to the input terminal of the inverter, in other words to the common connection point for the gates of the transistors PT1 and NT1, and the output terminal of the inverter, in other words the common connection point for the drains of the transistors PT1 and NT1, is connected to the gate of the open drain transistor NT0. The data signal line drive circuits are installed in each slave device. The slave device turns on the transistor NT0 by supplying a low-level control signal $S_D$ to the drive circuit, pulls the data signal line DL to ground potential GND level, and transmits an acknowledge signal to the master device MST.

In a drive circuit that is constructed in this manner, the slew rate can be adjusted by controlling the current drive capabilities of the open drain transistor NT0, for example, the size of the transistor NT0.

On the other hand, the data signal line drive circuit shown in FIG. 8 is constructed by means of an npn open collector transistor N2 an npn transistor N1, and a resistive element R1. By means of supplying a low level control signal $S_D$, the slave device turns the transistor N1 ON, and by holding the base of the transistor N2 at a high level, the transistor N2 is turned ON, the data signal line DL is pulled down to the ground potential GND level, and an acknowledge signal is transmitted to the master device MST.

In a drive circuit that is constructed in this manner, the slew rate can be adjusted by means of controlling the resistance value of the resistive element R1.

However, in the above-mentioned drive circuits used in the past, since the adjustment of the slew rate undergoes the influence of the stray capacitance of the data signal lines DL, the size of the transistor and the resistance value of the resistive element must be set to maintain a necessary slew rate in relation to the maximum stray capacitance C within limits. When the transistor or the resistance element is adjusted in response to a data signal line with a large stray capacitance [for other situations], when the stray capacitance is small, there is a tendency for the slew rate to become large. Because of this, based on Equation 1, since the spike current is mostly determined by the size of the transistor NT0 or the resistance value of the resistive element R1, even if the stray capacitance of the data signal line DL is reduced, the expected effect cannot be obtained.

This invention was made based on this type of information, and its purpose is to offer a signal line drive circuit that can control the slew rate and that can limit the generation of noise by reducing the spike current without being influenced by the stray capacitance of the signal line.

## SUMMARY OF THE INVENTION

In order to achieve the above-mentioned purposes, the signal line drive circuit of this invention has a first current supply circuit that supplies a prescribed current to a first node, a capacitive element that is connected between the above-mentioned first node and one end of the signal line, a first transistor that is connected between one end of the above-mentioned signal line and a reference voltage, and a second transistor that is connected between the above-mentioned first node and a reference voltage, a control terminal for the above-mentioned first transistor is connected to the above-mentioned first node that controls the conductance of the above-mentioned first transistor by means of controlling the conductance of the above-mentioned second transistor.

Also, the signal line drive circuit of this invention has a first current supply circuit that supplies a prescribed current to a first node, a second current supply circuit that supplies a prescribed current to the above-mentioned first node, a capacitive element that is connected between the above-mentioned first node and one end of the signal line, a first transistor that is connected between one end of the above-mentioned signal line and a reference voltage, and a second transistor that is connected between the above-mentioned first node and a reference voltage, and controls the ON/OFF of the above-mentioned second current supply circuit by means of controlling the conductance of the above-mentioned second transistor, and by extension, [controls] the conductance of the above-mentioned first transistor.

Also, this invention preferably has a third transistor that controls the ON/OFF of the above-mentioned first current supply circuit, and the above-mentioned second transistor and the above-mentioned third transistor are operated complementary.

According to this invention, a capacitive element having the prescribed capacitance value is connected to a signal line which has stray capacitance. Since the slew rate for the charging time of the signal line can be controlled by means of charging said capacitive element with the prescribed current, a transistor that is connected between the signal line and a prescribed potential, for example, ground potential, is made to conduct, and the spike current that is generated when the signal line is pulled down to the ground potential is suppressed.

## BRIEF DESCRIPTION OF THE DRAWINGS

FIG. 1 is a schematic showing Embodiment Configuration 1 of a signal line drive circuit related to this invention.

FIG. 2 is a schematic showing Embodiment Configuration 2 of a signal line drive circuit related to this invention.

FIG. 3 is a schematic showing Embodiment Configuration 3 of a signal line drive circuit related to this invention.

FIG. 4 is a schematic showing a modified example of the signal line drive circuit of Embodiment Configuration 3.

FIG. 5 is a block diagram showing the construction of a system containing a master device and a plurality of slave devices.

FIG. 6 is a diagram showing the connection relationship of the stray capacitance of the data signal line DL and an open drain transistor.

FIG. 7 is a schematic showing one example of a signal line drive circuit used in the past.

FIG. 8 is a schematic showing another example of a signal line drive circuit used in the past.

## REFERENCE NUMERALS AND SYMBOLS AS SHOWN IN THE DRAWINGS

PT1, PT2 pMOS transistor, NT0, NT1, NT2 nMOS transistor, P1, P2, P3

pnp transistor, N1, N2, N3, N4 npn transistor, DL Signal line, C1 Capacitor,

C0 Stray capacitance of the signal line DL, IS1, IS2 Current source, Vcc Power supply voltage, GND Ground potential

## DESCRIPTION OF THE EMBODIMENTS

Embodiment Configuration 1

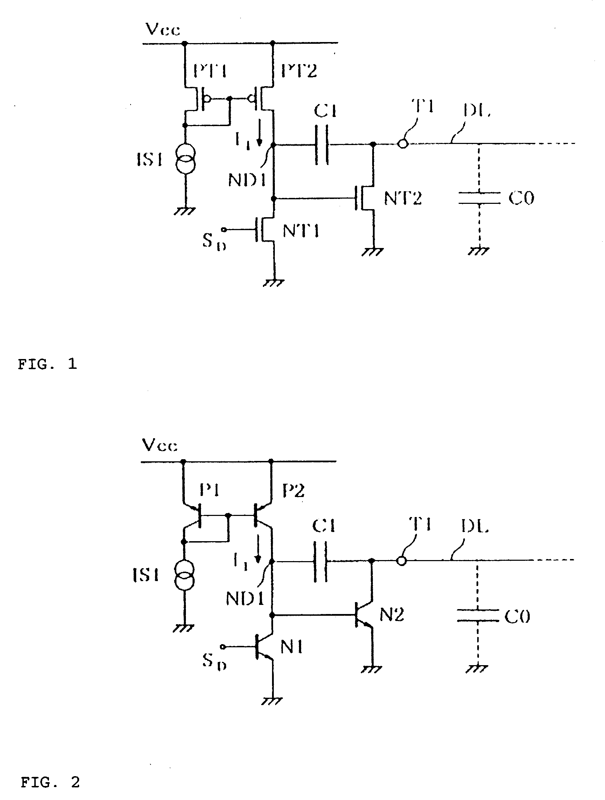

FIG. 1 is a schematic showing Embodiment Configuration 1 of a signal line drive circuit related to this invention.

As is illustrated, the signal line drive circuit of this embodiment configuration is constructed by means of the pMOS transistors PT1, PT2, the nMOS transistors NT1, NT2, the current source IS1, and the capacitor C1. The data signal line DL (for convenience hereinafter, simply called the signal line) is connected to the signal line drive circuit through terminal T1. The stray capacitance C0 is present on the signal line DL.

The source of transistor PT1 and PT2 are both connected to the supply line for the power source voltage Vcc. The gates of the transistor PT1 and PT2 are connected to each other. That connecting point is connected to the drain of the transistor PT1. The drain of the transistor PT1 is connected to the current source IS1, and the drain of the transistor PT2 is connected to the node ND1.

The capacitor C1 is connected between the node ND1 and the terminal T1 of the signal line DL. The drain of the transistor NT1 is connected to the node ND1, the source is grounded, and the gate is connected to the input terminal for the control signal $S_D$. The drain of the transistor NT2 is connected to terminal T1 of the signal line DL, the drain is grounded, and the gate is connected to the node ND1.

In the above-mentioned signal line drive circuit, a current mirror circuit is constructed by means of the transistor PT1 and PT2. By means of said current mirror circuit, a current $I_1$ is supplied from the drain of the transistor PT2 to the node ND1 that is almost the sane as the current of the current source IS1.

Said signal line drive circuit operates in response to a control signal $S_D$ that is supplied from a slave device. Normally, since the signal control signal $S_D$ is held at a high level, the transistor NT1 is turned ON, the node ND1 is at a low level, for example, held at ground potential GND level, and the transistor NT2 is turned OFF. In this case, since the node ND1 and the terminal T1 are DC-isolated by means of the capacitor C1, the signal line DL, as is shown in FIG. 5 for example, is pulled up to the power supply voltage Vcc through the resistive element that is connected between the signal line DL and the power supply voltage Vcc.

When the slave device transmits an acknowledge signal, the control signal $S_D$ is set to a low level. When the control signal $S_D$ shifts to a low level, the transistor NT1 is turned OFF, the capacitor C1 is charged by the current $I_1$ that is supplied by means of the current mirror circuit, and the voltage of the node ND1 rises. When the voltage level of the node ND1 exceeds the threshold voltage for the transistor NT2, the transistor NT2 is turned on, and the charge on the signal line DL is discharged to the ground potential GND side through the transistor NT2. As a result of the discharge, the voltage of the signal line DL is pulled down to almost ground potential GND and an acknowledge signal is transmitted to the master device MST.

If the change in the voltage v (t) of the terminal T1 during the discharge is taken note of, the spike current that is generated on the signal line DL can be calculated. If the change accompanying time t of the voltage v (t) at the terminal T1, in other words the slew rate dv (t)/dt, is defined as $SR_0$, the capacitive value of the stray capacitance of the signal line DL is defined as $C_0$, and the spike current is defined as $I_0$, the following equation is obtained.

$$I_0 = C_0 \cdot SR_0 \qquad (2)$$

On the other hand, the capacitor C1 that is connected between the node ND1 and the terminal T1 is discharged by the supplied current $I_1$ of the current mirror circuit, and if that slew rate is taken as $SR_1$, and the capacitive value of the capacitor C1 is taken as $C_1$, the following equation is obtained.

$$I_1 = C_1 \cdot SR_1 \qquad (3)$$

Since the slew rates $SR_0$, $SR_1$ are both determined by means of the voltage change dv (t)/dt of the terminal T1, $SR_0 = SR_1$ is established. The following equation can be derived by means of Equation 2 and 3.

$$I_0/C_0 = I_1/C_1 \qquad (4)$$

The spike current $I_0$ can be found as follows by means of the Equation 4

$$I_0 = I_1 C_0/C_1 \qquad (5)$$

In other words, in the signal line drive circuit of this embodiment configuration, the spike current that is generated when the signal line DL is pulled down to the ground potential GND is determined based on the current value of the current source IS1, the capacitive value of the capacitor C1, and the stray capacitance of the signal line. Because of this, by means of appropriately setting the current value of the current source IS1 and the capacitive value of the capacitor C1 a signal line drive circuit for a signal line DL may be designed in which the stray capacitance value is constant, the spike current can be controlled to the desired value, and the object of suppressing the noise that is generated due to the spike current can be achieved.

As was explained above, according to this embodiment configuration a current supply circuit that supplies a prescribed current, for example, conducts the discharge of capacitor C1 by means of a current mirror circuit, and controls the ON/OFF of a switching element transistor NT1 in response to a control signal $S_D$, and a transistor NT2 used for discharge is turned ON/OFF by the voltage of a node ND1 that is set in response to the ON/OFF of the transistor NT1. The slew rate when the voltage of the signal line DL is pulled down is determined by the current value of the current supply circuit and the capacitive value of capacitor C1; the current value of the spike current can be controlled by means of the said slew rate and the capacitive value of the stray capacitance of the signal line DL, and the noise that is generated due to the spike current can be suppressed.

FIG. 2 is a schematic showing Embodiment Configuration 2 of a signal line drive circuit related to this invention.

This embodiment configuration substitutes bipolar transistors for the MOS transistors in the above-mentioned Embodiment Configuration 1. In other words the pMOS transistors PT1 and PT2 in the signal line drive circuit of the Embodiment Configuration 1 are respectively replaced by the pnp transistors P1 and P2, and the nMOS transistors NT1 and NT2 are respectively replaced by the npn transistors N1 and N2.

The emitters of transistors P1 and P2 are connected to the supply line for the power supply voltage Vcc, the bases are connected in common, and that connecting point is connected to the collector of the transistor P1. The collector of the transistor P1 is connected to the current source IS1, and the collector of the transistor P2 is connected to the node ND1. In other words a current mirror circuit is constructed by means of transistors P1 and P2, and by means of said current mirror circuit, a current $I_1$ is supplied to the node ND1 that is almost the same as the supply current of the current source IS1.

The transistor N1 is connected between the node ND1 and the ground potential GND, and its base is connected to the input terminal for the control signal $S_D$.

The capacitor C1 is connected between the node ND1 and the terminal T1 of the signal line DL. The collector of the transistor N2 is connected to the terminal T1, the emitter is grounded, and the base is connected to the node ND1.

As was explained above, as for the signal line drive circuit of this embodiment configuration, because bipolar transistors are substituted for the MOS transistors in the signal line drive circuit of the Embodiment Configuration 1, it operates in almost the same manner as the signal line drive circuit of the Embodiment Configuration 1. In other words it operates in response to a control signal $S_D$ that is supplied from a slave device.

Normally, since the control signal $S_D$ is held at a high level, the transistor N1 is turned ON, and the node ND1 is held at almost ground potential GND. At this time, since the transistor N2 is turned OFF, the signal line DL is pulled up to the prescribed potential, for example, the power supply voltage Vcc.

When the slave device transmits an acknowledge signal, the control signal $S_D$ is set to a low level. When the control signal $S_D$ shifts to a low level, the transistor N1 is turned OFF, the capacitor C1 is charged by the current $I_1$ that is supplied by means of the current mirror circuit and the voltage of the node ND1 rises. Then the voltage level of the node ND1 exceeds the voltage Vbe between the base and emitter of the transistor N2, the transistor N2 is turned ON, and the charge on the signal line DL is discharged to the ground potential GND side through transistor N2. As a result of the discharge, the voltage of the signal line DL is pulled down to almost the ground potential GND, and an acknowledge signal is transmitted to the master device MST.

Here, if it is taken that the capacitive value of the capacitor C1 is $C_1$, and the capacitive value of the stray capacitance of the signal line DL as $C_0$, in the same manner as the Equations 2 to 4 in the embodiment configuration 1, since the relationship of $I_0/C_0 = I_1/C_1$ can be obtained, the spike current $I_0$ can be found by means of $I_0 = I_1 C_0/C_1$.

In other words, in the signal line drive circuit of this embodiment configuration, the spike current that is generated when the signal line DL is pulled down to the ground potential GND is determined by means of the current value of the current source IS1, the capacitive value of the capacitor C1, and the stray capacitance of the signal line. Because of this, in regard to a signal line DL in which the stray capacitance value is constant, by means of conveniently setting the current value of the current source IS1 and the capacitive value of the capacitor C1 that make up the signal line drive circuit, the spike current can be controlled to a desired value, and the purpose of suppressing noise that is generated due to the spike current can be achieved.

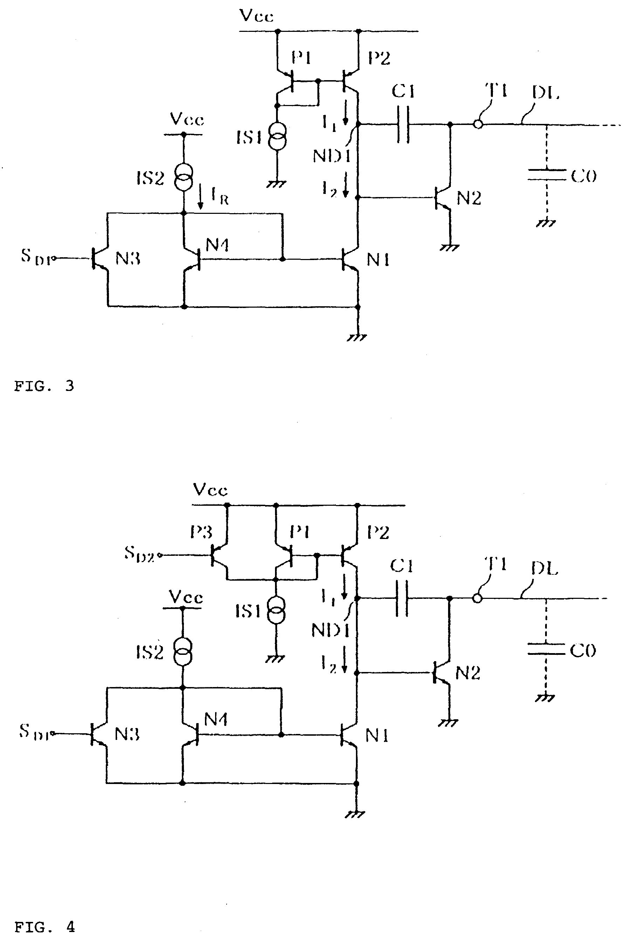

FIG. 3 is a schematic showing Embodiment configuration 3 of a signal line drive circuit related to this invention.

The above-mentioned Embodiment Configuration 1 and 2 both controlled the slew rate for the drop time of the voltage of the signal line DL. This embodiment configuration controls the slew rate in both the drop and rise of the signal line DL.

As shown in FIG. 3, in the signal line drive circuit of this embodiment configuration, the portion of the circuit that is constructed by means of the current mirror circuit that is constructed by the pnp transistors P1 and P2, the capacitor C1, and the npn transistors N1 and N2 has a construction that is the same as the corresponding section of the Embodiment Configuration 2. In this embodiment configuration, npn transistors N3 and N4 and the current source IS2 are further added.

The emitter of the transistor N4 is grounded and the collector is connected to the current source IS2. The bases of the transistors N4 and N1 are connected to each other, and that connection point is connected to the collector of the transistor N4. Also, the transistor N3 and the transistor N4 are connected in parallel and their bases are connected to the input terminal for the control signal $S_{D1}$.

In other words, the transistors N4 and N1 make up a current mirror circuit, and by means of the said current mirror circuit, a current $I_2$ is supplied to the node ND1 that is almost the same as the current of the current source IS2. The supply current $I_2$ of the said current mirror circuit is the current that flows from the node ND1 to the ground potential GND through the transistor N1.

When the control signal $S_{D1}$ is a low level, the transistor N3 is turned OFF, the current mirror circuit that is made up the transistors N4 and N1 is operating, and the current $I_2$ is supplied to the node ND1. At this time, since the base of the transistor N2 is held to a low level that is close to the ground potential GND, the transistor N2 is turned OFF, and the signal line DL is pulled up, for example, to the power supply voltage Vcc.

On the other hand, when the control signal $S_{D1}$ is a high level, since the transistor N3 is turned ON, the bases of the transistors N1 and N4 are held at ground potential GND, and these transistors are turned OFF. Because of this, the node ND1 is held to a level that is close to the power supply voltage Vcc, the transistor N2 is turned on, and the signal line DL is pulled down to the ground potential GND. By this means, an acknowledge signal is transmitted to the master device.

Normally the control signal $S_{D1}$ is held to a low level, and when a slave device transmits an acknowledge signal, the control signal $S_{D1}$ is held at a high level. In other words the control signal $S_{D1}$ of this embodiment configuration is a signal that is logically the opposite of the control signal $S_D$ in the above-mentioned Embodiment Configurations 1 and 2.

In this embodiment configuration, in order to transmit an acknowledge signal in the same manner as the above-mentioned Embodiment Configurations 1 and 2, when the signal line DL is pulled down to a low level the slew rate $SR_0$ is determined by the supply current $I_1$ of the current source IS1 and the capacitive value $C_1$ of the capacitor C1, and since $SR_0 = I_1/C_1$ if the capacitive value of the stray capacitance of the signal line DL is taken as $C_0$, the spike current $I_0$, that is instantaneously generated when the transistor N2 is turned on, can be found by means of $I_0 = I_1 C_0/C_1$.

On the other hand, when the transmission of the acknowledge signal is completed and the transistor N2 is switched from the ON state to the OFF state, the signal line (DL) is pulled up and its level is raised from the ground potential GND. At this time a difference current $I_2 - I_1$ flows in the capacitor C1, and since the capacitor C1 is charged by means of said difference current, its slew rate is determined by $I_2 - I_1/C_1$. The slew rate for the rise of the signal line DL is determined in response to this.

In other words, in the signal line drive circuit of this embodiment configuration, two current mirror circuits are provided that supply the currents $I_1$ and $I_2$; when the signal line DL is pulled down to the ground potential GND, the slew rate $SR_1$ for the signal line DL is determined by the current $I_1$ and the capacitance value $C_1$ of the capacitor C1, and the spike current $I_0$ is determined by $I_0 = I_1 C_0/C_1$ in response to this. On the other hand, since the slew rate when the signal line DL is pulled up from the ground potential GND is determined by the difference current $I_2 - I_1/C_1$, the slew rate for both the drop and the rise of the signal line DL can be controlled.

FIG. 4 is a schematic showing a modified example of a signal line drive circuit of this embodiment configuration. As is illustrated, this modified example has a construction that is almost the sane as the signal line drive circuit shown in FIG. 3. However, the pnp transistor P3 is connected in parallel with the transistor P1 that constructs a current mirror circuit. The control signal $S_{D2}$ is applied to the base of the transistor P3.

When the control signal $S_{D1}$ is a high level, the control signal $S_{D2}$ is held to a low level. Because of this, the transistor N3 is turned ON, and the transistor P3 is turned OFF. In response to this, the transistors N1 and N4 are both turned OFF, and current $I_2$ is not supplied. In this case, the transistor N2 is turned ON, the signal line DL is pulled down to the ground potential GND, and an acknowledge signal is transmitted to the master device. Since the current $I_1$ is applied to the node ND1 by means of the current mirror circuit made up of the transistors P1 and P2, the slew rate of the signal line DL is determined by means of the current $I_1$ and the capacitive value $C_1$ of the capacitor C1, and in response to this the spike current $I_0$ is determined by $I_0 = I_1 C_0/C_1$.

When the transmission of the acknowledge signal is completed, the control signal $S_{D1}$ is switched to a low level, and the control signal $S_{D2}$ to a high level, respectively. In response to this, since the transistor N3 is turned ON and the transistor P3 is switched to the OFF state, the transistor N1 and N2 are turned ON, and the current $I_2$ flows from the node ND1. On the other hand, the transistors P1 and P2 are turned OFF, and the current $I_1$ is not supplied to the node ND1.

In this case the transistor N2 is turned OFF and the signal line DL is pulled up from the ground potential GND. Now the slew rate at the time of the rise of the signal line DL is determined by the current $I_2$ and the capacitive value $C_1$ of the capacitor C1, and becomes $I_2/C_1$.

As was explained above, in the modified example shown in FIG. 4 the slew rate for both the drop and the rise of the signal line DL can be controlled by means of the current $I_1$ and the current $I_2$ that are supplied by means of the current mirror circuits and the capacitive value of the capacitor C1.

The signal line drive circuits and its modified example shown in the above-mentioned FIGS. 3 and 4 both illustrate circuits that are constructed of bipolar transistors, but this invention is not limited to this; for example, a signal line drive circuit that realizes the same functions and operations can be constructed by using MOS transistors.

As was explained above according to the signal line drive circuit of this invention, since the spike current when the signal line is driven can be suppressed by a simple circuit construction and the generation of noise can be greatly suppressed, the design of an IC wherein analog circuits and digital circuits are mixed can be easily conducted.

Also, according to this invention, there is the advantage that the drive capabilities of a drive circuit that is largely designed by considering the variations of normal processes and the temperature characteristics of the circuit elements can be conveniently designed in response to the characteristics of the circuit that is driven, and that it can be constructed with both bipolar transistors and MOS transistors.

**Claims**

1.  A signal line drive circuit having,

    a first current supply circuit that supplies a prescribed current to a first node,
    a capacitive element that is connected between the above-mentioned first node and one end of the signal line,
    a first transistor that is connected between one end of the above-mentioned signal line and a reference voltage, and,
    a second transistor that is connected between the above-mentioned first node and a reference voltage,
    and wherein a control terminal for the above-mentioned first transistor is connected to the above-mentioned first node, and which controls the conductance of the above-mentioned first transistor by means of controlling the conductance of the above-mentioned second transistor.

2.  A signal line drive circuit as claimed in claim 1 and further including,

    a second current supply circuit that supplies a prescribed current to the above-mentioned first node in an ON state thereof,
    and wherein the ON/OFF state of the above-mentioned second current supply circuit is set by means of controlling the conductance of the above-mentioned second transistor.

3.  A signal line drive circuit, characterized in Claim 2 having a third transistor that controls the ON/OFF state of the above-mentioned first current supply circuit, wherein the above-mentioned second transistor and the above-mentioned third transistor operate in a complementary way.

FIG. 1

FIG. 2

FIG. 3

FIG. 4

FIG. 5

FIG. 6

FIG. 8